## Europäisches Patentamt

## European Patent Office

## Office européen des brevets

(19)

(11) EP 0 895 000 A1

(12) **DEMANDE DE BREVET EUROPEEN**

(43) Date de publication:
03.02.1999 Bulletin 1999/05

(51) Int Cl.⁶: **F16H 37/02**, B60S 1/16

(21) Numéro de dépôt: 98401887.9

(22) Date de dépôt: 24.07.1998

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: 25.07.1997 FR 9709483

(71) Demandeur: **VALEO SYSTEMES D'ESSUYAGE**
**78321 La Verrière (FR)**

(72) Inventeur: **Coutant, Frédéric**
**86000 Poitiers (FR)**

(74) Mandataire: **Le Forestier, Eric**
**Cabinet Regimbeau,**
**26, avenue Kléber**
**75116 Paris (FR)**

(54) **Motoréducteur à géométrie modifiable, notamment pour essuie-glace de véhicule automobile**

(57) L'invention concerne un motoréducteur, notamment pour essuie-glace de véhicule automobile, comportant un carter (10), un moteur muni d'un arbre moteur (20), une roue de sortie (50) solidaire d'un arbre de sortie (300) du motoréducteur s'étendant à l'extérieur du carter (10), et au moins deux éléments rotatifs (30, 40) autres que l'arbre moteur (20) aptes à entraîner la roue de sortie (50), caractérisé en ce qu'il comporte un élément de transmission déformable en boucle (60), en prise avec chacun desdits éléments rotatifs (30, 40) et avec la roue de sortie (50).

FIG_1

## Description

L'invention concerne les motoréducteurs. Plus particulièrement, l'invention concerne les motoréducteurs aptes à transmettre un mouvement de rotation entre un arbre moteur et un arbre de sortie, utilisés notamment au sein de dispositifs d'entraînement de balais d'essuie-glaces de véhicules automobiles.

On a proposé un motoréducteur de ce type dans le brevet FR 2 650 647. Il comprend un moteur électrique dont l'arbre est fileté de manière à former deux vis coaxiales disposées bout à bout et ayant des sens d'enroulement opposés l'un à l'autre. Il comprend également une paire de pignons formés chacun de deux cylindres coaxiaux dentés à leur périphérie. Les deux pignons s'engagent respectivement avec chacune de ces vis, et une roue de sortie du motoréducteur, également dentée sur sa périphérie, est engrenée avec ces deux pignons à la fois. Le diamètre de la roue de sortie est plus grand que celui des pignons, de sorte que la roue de sortie est entraînée avec une vitesse de rotation réduite par rapport à celle des pignons.

Les constructeurs de motoréducteurs pour balais d'essuie-glace sont fréquemment appelés à modifier le positionnement de la roue de sortie au sein du motoréducteur, en fonction du modèle de véhicule auquel est destiné le motoréducteur. Ce positionnement de la roue de sortie dépend en effet de l'emplacement qui est prévu pour le motoréducteur au sein du véhicule par rapport à la position du balai d'essuie-glace à entraîner et plus généralement par rapport à la configuration de l'emplacement du motoréducteur sur le véhicule.

La position de l'arbre de sortie au sein du motoréducteur précédemment décrit est difficilement modifiable. En effet, une modification de la position de la roue de sortie sans modifier les positions et les dimensions des autres éléments tournants n'est possible qu'à condition d'une part que l'axe de la roue de sortie reste équidistant des axes de rotation des deux pignons, et d'autre part à condition que le diamètre de la roue de sortie soit adapté en fonction de l'éloignement de la roue de sortie par rapport aux deux pignons, de façon à ce que la roue de sortie engrène toujours ces deux pignons.

Un but premier de la présente invention est de fournir un motoréducteur dans lequel le positionnement de la roue de sortie est facilement adaptable sans modifier la géométrie et le positionnement des autres pièces tournantes du motoréducteur.

On a proposé dans le document FR 2 565 537 un motoréducteur pour l'entraînement d'un balai d'essuyage de miroir de rétroviseur dans lequel le balai est monté sur un arbre de sortie solidaire d'un pignon entraîné par courroie.

Un tel dispositif produit sur la courroie des contraintes locales élevées, et présente de ce fait des risques importants de rupture de cette courroie.

Un second but de la présente invention est de fournir un motoréducteur dans lequel une courroie de transmission est soumise à un niveau de contraintes diminué.

En vue de la réalisation de ces buts, l'invention propose un motoréducteur conforme à la revendication 1.

Un motoréducteur selon l'invention offre de nombreuses possibilités de modifier le positionnement de la roue de sortie par simple adaptation de la courroie, sans déplacement des autres pièces tournantes ni adaptation de la géométrie de la roue de sortie, et ne produit sur cette courroie que des contraintes réparties sur celle-ci.

De manière avantageuse, l'invention pourra présenter au moins l'une des caractéristiques proposées aux revendications 2 à 6.

D'autres caractéristiques, buts et avantages de l'invention apparaîtront à la lecture de la description détaillée qui va suivre d'un mode préféré de réalisation de l'invention qui va suivre, et en regard des dessins annexés, donnés à titre d'exemples non limitatifs et sur lesquels :

- la figure 1 est une vue en coupe d'un motoréducteur conforme à l'invention, selon un plan de coupe perpendiculaire à un axe de rotation d'une roue de sortie du motoréducteur;
- la figure 2 est une vue en coupe du même motoréducteur conforme à l'invention, selon un plan de coupe II-II indiqué sur la figure 1, qui est perpendiculaire à un axe de rotation d'un arbre moteur.

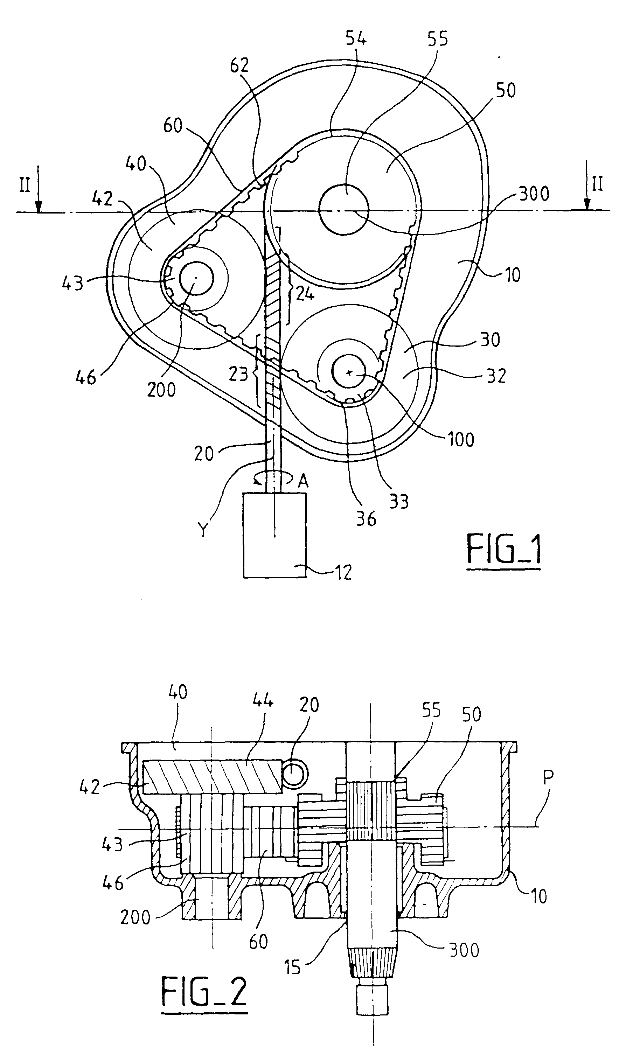

Le motoréducteur des figures 1 et 2 est adapté à transmettre la rotation d'un arbre 20 d'un moteur électrique 12, à un arbre 300 de sortie du motoréducteur qui est solidaire d'un balai d'essuie-glace non représenté, par l'intermédiaire d'une roue de sortie 50 solidaire de l'arbre de sortie 300. Les axes de rotation de l'arbre de sortie 300 et de l'arbre moteur 20 sont perpendiculaires l'un à l'autre. L'arbre moteur 20, la roue de sortie 50, et un ensemble de pièces intermédiaires entre ces deux éléments, sont contenus dans un carter 10.

L'arbre moteur 20 porte deux filetages 23 et 24 disposés bout-à-bout, enroulés autour de l'arbre moteur 20 dans des sens opposés l'un à l'autre. Ces deux filetages 23 et 24 forment ainsi une paire de vis coaxiales.

Deux arbres supports 100 et 200 sont fixés sur le carter 10, perpendiculairement à l'arbre moteur 20, de part et d'autre de celui-ci. Plus précisément, le positionnement de chacun de ces arbres supports 100 et 200, selon la direction indiquée par l'arbre moteur 20, est tel que chacun des deux arbres supports 100 et 200 est en regard de chacune des parties centrales des filetages 23 et 24.

Les deux arbres supports 100 et 200 sont engagés respectivement dans des pignons 30, 40 à travers à chaque fois un orifice cylindrique central du pignon, coaxial avec un axe de révolution de ce pignon.

Les deux pignons 30 et 40 sont chacun composés d'un plateau cylindrique supérieur 32, 42 surmontant un cylindre inférieur 33, 43 de diamètre inférieur à celui du plateau cylindrique supérieur correspondant. Chacun de ces cylindres inférieurs 33, 43 est rigidement solidaire et coaxial avec le plateau cylindrique qui le surmonte. Les plateaux cylindriques supérieurs 32 et 42 sont chacun munis d'une denture périphérique 34, 44 dont les dents sont inclinées par rapport à l'axe de révolution du plateau cylindrique correspondant. Chacun des cylindres inférieurs 33 et 43 comporte une denture périphérique référencée respectivement 36 et 46, dont les dents sont parallèles à la direction de l'axe de révolution du cylindre inférieur correspondant.

Les pignons 30 et 40 ont préférentiellement des géométries identiques.

Dans la suite, on appelle plan moyen d'une pièce cylindrique, le plan perpendiculaire à l'axe de révolution de cette pièce et la coupant à mi-hauteur.

Les pignons 30 et 40 sont fixés à rotation sur les arbres supports 100 et 200, de manière telle qu'un plan moyen de chacun des plateaux cylindriques supérieurs 32 et 42 contient l'axe de révolution de l'arbre moteur 20. Les arbres supports 100 et 200 sont en outre disposés à une distance de l'arbre moteur 20 qui est telle que les plateaux cylindriques supérieurs 32 et 42 coopèrent par leur périphérie dentée respectivement avec les filetage 23 et 24.

La roue 50 comporte un orifice central cylindrique 55, coaxial avec l'axe de révolution de la roue 50. Cet orifice central 55 est muni sur sa face intérieure d'un rainurage interne dont les fines rainures, parallèles à l'axe de révolution de la roue 50, sont uniformément réparties autour de l'axe de révolution de la roue 50.

L'arbre 300 porte une portion rainurée dont le diamètre moyen est complémentaire du diamètre intérieur de l'orifice central 55. Cette portion rainurée s'étend sur une longueur égale à l'épaisseur de la roue 50, et est formée d'un ensemble de rainures parallèles à l'axe de l'arbre 300, sensiblement identiques aux rainures intérieures de l'orifice 55 et de même longueur que celles-ci. L'arbre de sortie 300 est engagé à force dans l'orifice 55 de la roue de sortie 50, de sorte que les deux rainurages coopèrent. L'arbre de sortie 300 est ainsi solidaire en rotation avec la roue de sortie 50 et apte à coulisser dans celle-ci.

L'arbre de sortie 300 est monté libre en rotation dans un orifice 15 du boîtier 10, parallèlement aux axes 100 et 200.

La roue 50 porte une denture périphérique 54 dont les dents sont parallèles à l'axe de révolution de la roue 50 et ont des dimensions similaires à celles des dents périphériques des cylindres inférieurs 33 et 43 des pignons 30 et 40.

Dans le présent exemple, le rayon extérieur de la roue de sortie 50 est de l'ordre de deux fois supérieur au rayon extérieur de chacun des cylindres inférieurs 33 et 43. L'épaisseur de la roue 50, mesurée parallèlement à son axe de révolution, est sensiblement égale à la longueur des cylindres inférieurs 33 et 43, également mesurée parallèlement leur axe de révolution.

Comme on peut le voir sur la figure 2, le plan moyen de la roue de sortie 50, référencé P, est confondu avec les plans moyens des cylindres inférieurs 33 et 43.

Une courroie 60 est tendue autour des cylindres inférieurs 33, 43 et de la roue de sortie 50. Elle forme un boucle s'étendant parallèlement au plan P et de manière symétrique par rapport à celui-ci. La courroie 60 présente une largeur sensiblement égale à la longueur des cylindres inférieurs 33 et 43 et à l'épaisseur de la roue 50, précédemment définis.

Dans le mode de réalisation préférentiel représenté sur les figures 1 et 2, la courroie 60 porte sur une face intérieure une denture complémentaire des dentures périphériques des cylindres inférieurs 33, 43, et de la roue 50. Les dents intérieures de la courroie 60 sont disposées perpendiculairement au plan P.

La courroie 60 est avantageusement réalisée en un matériau plastique dont l'élasticité permet à la courroie 60 de s'adapter à d'éventuels écarts ou variations du positionnement relatif des cylindres inférieurs 33, 43 et de la roue de sortie 50. Cette élasticité permet également aux dents de la courroie 60 de s'adapter à d'éventuels écarts et imperfections géométriques des dentures avec lesquelles elle coopère.

Grâce à l'utilisation de la courroie 60, le motoréducteur peut fonctionner sans lubrification de la partie extérieure de la roue de sortie 50 et des cylindres inférieurs 33 et 43.

Les tolérances sur le positionnement de la roue de sortie 50 et sur les profils des différentes pièces ayant des dentures périphériques qui coopèrent avec la courroie 60 sont nettement plus grandes que dans le cas d'un motoréducteur où la roue de sortie est entraînée par des roues dentées directement engrenées avec elle.

Comme représenté à la figure 2, l'arbre moteur 20 est décalé latéralement par rapport au plan médian P de la roue de sortie 50, d'une distance supérieure à la somme des rayons de l'arbre moteur 20 et de la demi-épaisseur de la roue 50. Ainsi, la roue de sortie 50 s'étend partiellement sous l'arbre moteur 20 sans interférer avec lui. La roue 50 présente donc des parties qui sont à l'aplomb, parallèlement à l'axe de révolution de cette roue, d'une portion de l'arbre moteur 20.

Cette disposition préférentielle permet, comme on peut le voir sur la figure 2, de laisser un espace libre autour du périmètre de la roue 50. On peut donc facilement remplacer la roue 50 représentée sur les figures 1 et 2 par une roue de diamètre plus grand, de manière à obtenir une réduction plus forte de la vitesse de rotation de la roue de sortie 50 par rapport à celle de l'arbre moteur 20. Une telle roue de sortie s'étendra encore sous l'arbre 20, sans interférer avec lui.

La roue de sortie 50 et l'arbre de sortie 300 étant facilement désolidarisables par coulissement de l'arbre 300 dans l'orifice central 55 de la roue 50, un changement de roue de sortie et par là une modification du rapport de réduction des vitesses de rotation est particulièrement aisé.

De même, on peut envisager une roue de sortie 50 décalée dans le plan P en direction de rapprochement de l'arbre moteur 20 sans que la roue 50 n'interfère avec l'axe 20. Il suffit pour cela d'utiliser un boîtier 10 dont le passage 15 soit placé dans une position plus proche de l'axe 20 que celle qui est représentée sur les figures 1 et 2. Aucune modification des différentes roues dentées n'est alors nécessaire.

Ces différentes modifications ne nécessitent ni la conception de pièces mécaniques de haute précision, ni des ajustements précis comme il serait nécessaire lors d'une mise au point d'un nouvel engrenage direct entre deux roues dentées.

Dans une variante de l'invention, le matériau constitutif de la courroie 60 peut être choisi suffisamment souple pour s'adapter élastiquement à d'éventuelles variations de diamètre de la roue de sortie 50 ou à des modifications de son positionnement dans le plan P.

Le fonctionnement du dispositif est le suivant :

L'arbre 20 est entraîné en rotation par le moteur électrique 12. Il transmet sa rotation aux pignons 30 et 40 par l'intermédiaire des filetages 23 et 24 engagés respectivement dans les dentitions périphériques obliques 34 et 44 des plateaux supérieurs 32, 42 des pignons 30 et 40.

Les filetages 23 et 24 ayant des directions d'enroulement opposées et les pignons 30 et 40 étant de part et d'autre de l'arbre 20, les pignons 30 et 40 sont entraînés dans un même sens giratoire.

Ainsi, pour une rotation de l'arbre 20 dans le sens indiqué par la flèche A de la figure 1, l'arbre moteur 20 entraîne les pignons 30 et 40 dans le sens de rotation des aiguilles d'une montre. La géométrie des deux pignons 30 et 40 étant identique et les pas des deux filetages 23 et 24 étant identiques, les vitesses de rotation des deux pignons 30 et 40 sont les mêmes. Ainsi les deux pignons 30 et 40 participent de manière équivalente à l'entraînement de la courroie 60. La courroie 60 entraîne à son tour la roue de sortie 50 en rotation.

Le diamètre de la roue de sortie 50 étant nettement supérieur aux diamètres des cylindres inférieurs 33 et 43 des pignons 30 et 40, la vitesse de rotation de la roue de sortie 50 est nettement inférieure aux vitesses de rotation des pignons 30 et 40.

Le motoréducteur selon l'invention est facilement adaptable à différentes exigences de réalisation et notamment à différentes longueurs de balais d'essuie-glaces. Pour une vitesse de rotation donnée de l'arbre moteur 20, on peut ajuster la vitesse de la roue de sortie 50 en modifiant son diamètre.

L'utilisation de la courroie crantée 60 permet d'obtenir une transmission de l'effort sur un quart de la périphérie des cylindres inférieurs 33 et 43, et sur un tiers de la périphérie de la roue de sortie 50. Cette meilleure répartition des efforts permet de réduire environ de moitié la hauteur des dents des cylindres inférieurs 33 et 43 et de la roue de sortie 50, par rapport à un dispositif où ces pièces sont directement engrenées entre elles. Un motoréducteur selon l'invention présente ainsi un encombrement et un poids réduits.

Grâce à cette meilleure répartition, les matériaux constitutifs des différentes pièces tournantes dentées peuvent être choisis moins robustes que dans le cas des dispositifs à engrenage direct. L'invention permet ainsi une réduction du coût de réalisation du motoréducteur et plus généralement une plus grande flexibilité dans le choix des différents matériaux constituant les différentes pièces. Par ailleurs, la transmission des efforts par une courroie est plus silencieuse qu'une transmission par engrenage direct d'une pièce tournante sur la roue de sortie.

La courroie 60 exerce de plus une tension élastique sur les pignons 30 et 40 tendant à les mettre en appui contre l'arbre moteur 20, ce qui participe à empêcher que les dents des deux plateaux cylindriques supérieurs 32 et 42 ne glissent hors des dépressions des filetages 23 et 24, notamment à l'occasion d'un blocage de la roue de sortie 50.

L'utilisation de la courroie 60 permet en outre d'éliminer les jeux d'engrenages directs qui, de manière connue, provoquent des à-coups dans le mouvement de la roue de sortie 50 et du moteur électrique 12. Le motoréducteur décrit ici est d'une grande précision.

Les pignons 30, 40 et la roue 50 n'étant pas en contact, les choix des matériaux constitutifs de la roue 50 et des pignons 30 et 40 peuvent être réalisés indépendamment. Les pignons 30 et 40 peuvent par exemple être réalisés en polyacétate ou en polyoxyméthylène, commercialisé sous la marque DELRIN, ou en polyamide commercialisé sous la marque Zytel, tandis que la roue de sortie 50 peut être réalisée en alliage léger. Une roue 50 en alliage métallique léger permet de supprimer des formes de moletage spéciales autour de l'arbre 300 et à l'intérieur de la roue de sortie 50, utilisées auparavant avec des roues en matière plastique.

De même, l'utilisation d'une roue de sortie métallique permet d'éviter, en cas de surchauffe accidentelle de la roue de sortie 50, que ses dents ne se déforment et ne restent déformées après refroidissement de la roue 50.

Plus généralement, on peut, grâce à l'utilisation de la courroie 60, envisager, pour les différentes pièces dentées à leur périphérie, des matériaux constitutifs qui étaient jugés trop bruyants dans le cas des dispositifs à engrenages directs.

Dans une variante de l'invention, la courroie est une courroie non crantée tandis que les cylindres inférieurs 33, 43 et la roue de sortie 50 sont des cylindres à périphérie lisse. Dans cette variante, aucune indexation du motoréducteur n'est nécessaire au montage. Par ailleurs, si une surcharge importante intervient sur les balais d'essuie-glace, alors la courroie glisse sur les différents cylindres, protégeant le moteur contre un blocage et une surchauffe. On peut alors, dans le cas d'un tel dispositif, supprimer les dispositifs de protection du moteur contre les échauffements, tels que les protections thermiques qui sont utilisées dans les dispositifs actuels d'entraînement d'essuie-glace.

En pratique, $V_{pignon}$ étant la vitesse de rotation de chacun des pignons 30 et 40, $V_{arbre\ moteur}$ étant la vitesse de rotation de l'arbre moteur 20 et $V_{sortie}$ étant la vitesse de rotation de la roue de sortie 50, on cherche à obtenir les relations suivantes entre ces vitesses de rotation, la vitesse de rotation visée pour la roue de sortie 50 étant de 100 tours par minute.

$$V_{pignons} = V_{arbre\ moteur} / 17,5$$

$$V_{sortie} = V_{pignon} / 3,307$$

$$\text{soit } V_{sortie} = V_{arbre\ moteur} / 57,88$$

Afin d'obtenir ces conditions, on choisit préférentiellement un rayon des cylindres inférieurs 33 et 43, mesuré à partir des sommets des dents de leur périphérie, qui est égal à 7,5 mm, et un rayon de la roue de sortie 50, mesuré de la même façon, qui est égal à 17,5 mm.

Dans la configuration représentée à la figure 1, les différents entraxes sont de l'ordre de 40 mm et la périphérie de la courroie 60 a une longueur proche de 185 mm.

Bien entendu, l'invention n'est pas limitée aux exemples de réalisation qui viennent d'être décrits, mais s'étend à toute variante conforme à son esprit. Ainsi, la courroie 60 peut être remplacée par une chaîne, les dentures périphériques des cylindres inférieurs 33 et 43 et de la roue de sortie 50 étant alors adaptées pour coopérer de manière complémentaire avec cette chaîne.

**Revendications**

1. Motoréducteur, notamment pour essuie-glace de véhicule automobile, comportant un carter (10), un moteur muni d'un arbre moteur (20), une roue de sortie (50) solidaire d'un arbre de sortie (300) du motoréducteur s'étendant à l'extérieur du carter (10), et au moins deux éléments rotatifs (30, 40) autres que l'arbre moteur (20) aptes à entraîner la roue de sortie (50), caractérisé en ce qu'il comporte un élément de transmission déformable en boucle (60), en prise avec chacun desdits éléments rotatifs (30, 40) et avec la roue de sortie (50).

2. Motoréducteur selon la revendication 1, caractérisé en ce que l'élément de transmission déformable en boucle (60) est une courroie (60).

3. Motoréducteur selon la revendication 2, caractérisé en ce que la courroie (60) présente une face interne crantée et en ce qu'elle coopère avec lesdits éléments rotatifs (30,40) et avec la roue de sortie (50) au niveau de dentures périphériques (34,44,54) formées sur chacun d'eux.

4. Motoréducteur selon l'une des revendications précédentes, caractérisé en ce que lesdits éléments rotatifs (30,40) portent une denture périphérique engrenée avec un filetage (23,24) porté par l'arbre moteur (20).

5. Motoréducteur selon la revendication 4, caractérisé en ce que chacun desdits éléments rotatifs (30,40) comporte une première roue (32,42) portant une denture périphérique (34,44) engrenée avec un filetage porté par l'arbre moteur (20) et une seconde roue (33,43) coaxiale et solidaire avec la première roue (32,42), en prise avec l'élément de transmission déformable en boucle (60).

6. Motoréducteur selon l'une des revendications 4 à 5, caractérisé en ce que l'arbre moteur (20) porte deux filetages (23,24) ayant des sens d'enroulement opposés l'un à l'autre, et en ce que lesdits éléments rotatifs (30,40) sont disposés de part et d'autre de l'arbre moteur (20) et coopèrent chacun avec l'un des deux filetages (23,24).

FIG_1

FIG_2

**Office européen des brevets**

# RAPPORT DE RECHERCHE EUROPEENNE

Numéro de la demande

EP 98 40 1887

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X,D | FR 2 565 537 A (VINCENT PASCAL) 13 décembre 1985 | 1-3 | F16H37/02 B60S1/16 |
| Y | * le document en entier * | 4-6 | |
| Y,D | FR 2 650 647 A (MITSUBA ELECTRIC MFG CO) 8 février 1991 | 4-6 | |
| A | * le document en entier * | 1 | |
| Y | US 4 840 349 A (PETER CORNELIUS ET AL) 20 juin 1989 * colonne 1, ligne 35 - colonne 2, ligne 9 * | 1-6 | |
| Y | FR 2 679 184 A (VALEO SYSTEMES ESSUYAGE) 22 janvier 1993 * le document en entier * | 1-6 | |
| A | DE 38 40 823 A (RUPPERT FRANZ DIPL ING) 7 juin 1990 * le document en entier * | 1-3 | |

**DOMAINES TECHNIQUES RECHERCHES (Int.Cl.6)**

F16H
B60S

Le présent rapport a été établi pour toutes les revendications

| Lieu de la recherche | Date d'achèvement de la recherche | Examinateur |
|---|---|---|
| BERLIN | 9 décembre 1998 | von Arx, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)